# EUROPEAN PATENT APPLICATION

(11) **EP 4 234 417 A1**
(43) Date of publication of application: **30.08.2023**
(21) Application number: 22159124.1
(22) Date of filing: 28.02.2022
(51) Int. Cl.: B65B 1/32, B65B 3/28, B65B 37/18, B67C 3/20, G01G 17/06

(54) **UNIT AND METHOD FOR FILLING ARTICLES WITH POURABLE PRODUCTS**

(71) Applicant: Chiaramello Industria S.r.l., 12045 Fossano (CN) (IT)
(72) Inventor: CHIARAMELLO, Luciano, 12045 Fossano (CN) (IT)
(74) Representative: Studio Torta S.p.A.

(57) **Abstract**

The invention describes a filling unit (1) for filling at least one article (2) with a pourable product, comprising: a dispensing valve (5) which is selectively movable between an open position and a closed position in which it prevents said dispensing; a support element (10) which defines a support seat (11) for supporting the article (2), said support seat (11) being arranged in a predetermined position relative to said valve (5); and a control unit (15) operatively connected to the valve (5) and programmed to move the valve (5) between the open and closed positions; the unit (1) further comprises a sensor (20) relative to which said support element (10) is mounted in a movable manner, and which generates a first signal (S0) when said support element (10) is located inside a volume (A) surrounding said sensor (20) and a second signal (S) when said support element (10) is located outside said volume (A); the control unit (15) acquires the first or second signal (S0, S) from said sensor (20) and moves the valve (5) into the closed position when the sensor (20) generates one (S) of said first and second signals (S0, S) .

## Description

The present invention relates to a unit and to a method for filling articles with pourable products, for example food products or pharmaceutical products.

Filling units are known essentially comprising:
- a tank filled with the pourable product;
- a plurality of filling valves; and
- a plurality of support elements for supporting articles arranged underneath respective filling valves.

Each filling valve essentially comprises a casing which defines a chamber fluidically connected to the tank and a plug which is movable relative to the relative casing between:
- a relative open position in which it allows the pourable product to fall into the respective article; and
- a relative closed position in which it prevents such fall.

In order to fill the respective articles with a desired quantity of pourable product, the filling valves are controlled, in a known manner, so as to move from the respective open positions to the respective closed positions when a flow rate sensor has indicated that a desired flow rate has passed through the valve or when a weight sensor arranged underneath the article has indicated that the filled article has reached a predetermined weight.

Alternatively, the filling valves are moved from the respective open positions to the respective closed positions when a level sensor has indicated that a predetermined filling level of the article has been reached or when a chronometer has indicated that the filling valves have remained in the respective open positions.

With particular reference to the known solutions comprising a weight sensor, the need is felt to simplify the design of the filling unit and to leave the area underneath the article to be filled free, without compromising the precision of the filling operation.

Furthermore, the need is felt in the sector to be able to calibrate the filling unit in a fast and precise manner, so as to allow articles having different weights to be filled with different quantities of pourable product, using the same unit.

According to the invention, this object is achieved by a filling unit for filling articles with a pourable product, as defined in claim 1.

The present invention also relates to a method for filling articles with a pourable product, as defined in claim 11.

For a better understanding of the present invention, a preferred non-limiting embodiment thereof is described in the following, purely by way of example and with the aid of the accompanying drawings, wherein:
- Figure 1 is a perspective view of a filling unit according to the principles of the present invention; and
- Figures 2 and 3 illustrate a side view of the filling unit of Figure 1 in respective operating configurations.

With reference to the accompanying figures, reference numeral 1 indicates, as a whole, a filling unit for filling articles 2 with pourable products, preferably food products or pharmaceutical products.

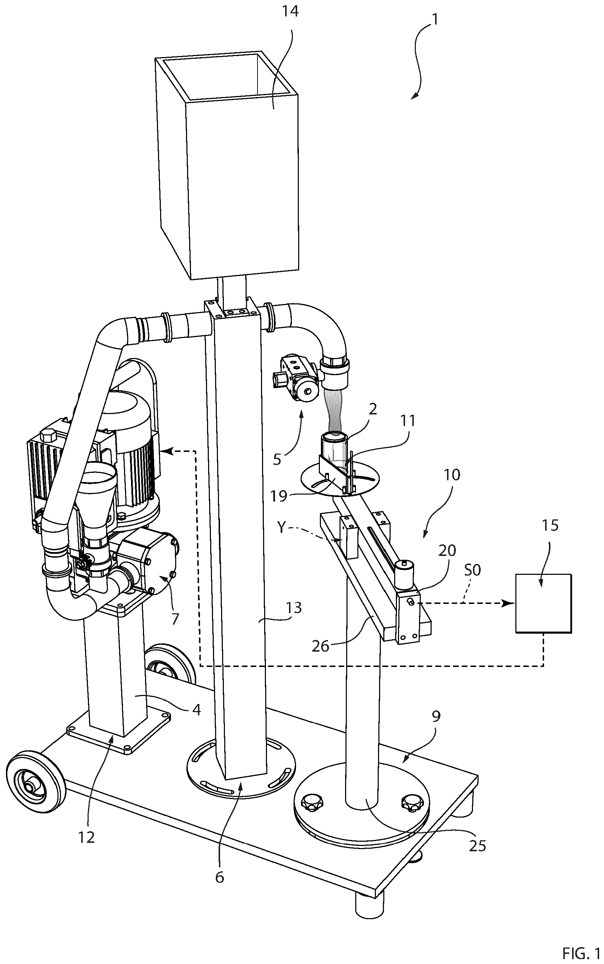

The unit 1 essentially comprises (Figure 1):
- a tank 4 filled with the pourable product;
- a valve 5 fluidically connected to the tank 4 and movable between an open position in which it allows the flow of the pourable product and a closed position in which it prevents such flow; and
- a pump 7 fluidically connected to the tank 4 and the valve 5, and actuatable in order to convey the pourable product from the tank 4 to said valve 5.

In particular, the valve 5 comprises, in a known manner and not illustrated as not necessary for the purposes of the present invention:
- a fixed body which defines a chamber fluidically connected to the tank; and
- a plug which is movable relative to the fixed body between a first position in which it uncovers a passage fluidically connected to the aforementioned chamber and a second position in which it obstructs such passage.

The unit 1 further comprises, with reference to Figure 1:
- a base 6, which is movable on wheels and lies on a horizontal plane;
- a vertical upright 12, which supports the tank 4 and the pump 7, and is attached to the base 6;
- a vertical upright 13, which supports the valve 5 and is attached to the base 6; and
- a structure 9, which bears a support element 10 which defines a seat 11 for the article 2.

The seat 11 is arranged aligned with and underneath the valve 5 with reference to an axis Z arranged, in use, vertically.

In other words, the valve 5, when arranged in the open position, carries out a filling "by gravity" of the article 2.

The seat 11 further defines a through hole 19 designed to allow the dripping of any drops of pourable product following the moving of the valve 5 into the closed position (Figure 1).

The unit 1 further comprises:
- an electrical switchboard 14 with a push-button command panel (not illustrated) of the unit 1; and
- a control unit 15 functionally connected to the valve 5 for moving said valve 5 between the aforementioned open and closed positions.

Advantageously, the unit 1 comprises a sensor 20 relative to which the support element 10 is mounted in a movable manner;
the sensor 20 is designed to generate:
   - a signal SO when the support element 10 is located inside a volume A surrounding said sensor 20; and
   - a signal S when the support element 10 is located outside the volume A surrounding said sensor 10;
the control unit 15 is programmed to receive such signal S0, S and to move the valve 5 from the open position to the closed position when the sensor S generates the signal S.

More specifically, the sensor 20 is a proximity sensor capable of contactlessly detecting the presence or the absence of the support element 10 which is located or not located inside the volume A, i.e. at a given distance from said sensor 20.

The support element 10 is inclinable relative to an axis Y relative to the sensor 20.

More specifically, the structure 9 further comprises:
- a column 25 attached to the ground and extending along the axis Z; and
- a crossbeam 26 elongated along an axis X orthogonal to the axes Y, Z, attached to the column 25 and on which the support element 10 is hinged about the axis Y.

The sensor 20 is attached to the structure 9.

More precisely, the sensor 20 is attached to an end 27 of the crossbeam 26.

The support element 10 is shaped as a rod elongated along the axis X and is hinged about the axis Y relative to the crossbeam 26.

The support element 10 further comprises:
- an axial end 30 facing the sensor 20; and
- an end 31 opposite the end 30 defining the seat 11.

The hinge axis Y of the support element 10 is interposed between the ends 30, 31.

In the illustrated case, the axis Y is arranged at an extension direction of the column 25.

In the illustrated case, the axis Y is orthogonal to the axis Z and is arranged horizontally.

The sensor 20 generates the signal S0, S on the basis of the position of the end 30, which depends on an angle of inclination α of the support element 10.

In particular, the sensor 20 generates the signal S0, S when the angle of inclination α is respectively below or above a threshold value α0.

The support element 10 further comprises:
- a slit 40 which extends parallel to the axis X between the end 30 and the axis Y so as to define a guide parallel to the axis X;
- a counterweight 41 which is slidable inside the slit 40 parallel to the axis X; and
- a constraint element for locking the counterweight 41 in a desired position relative to the slit 40.

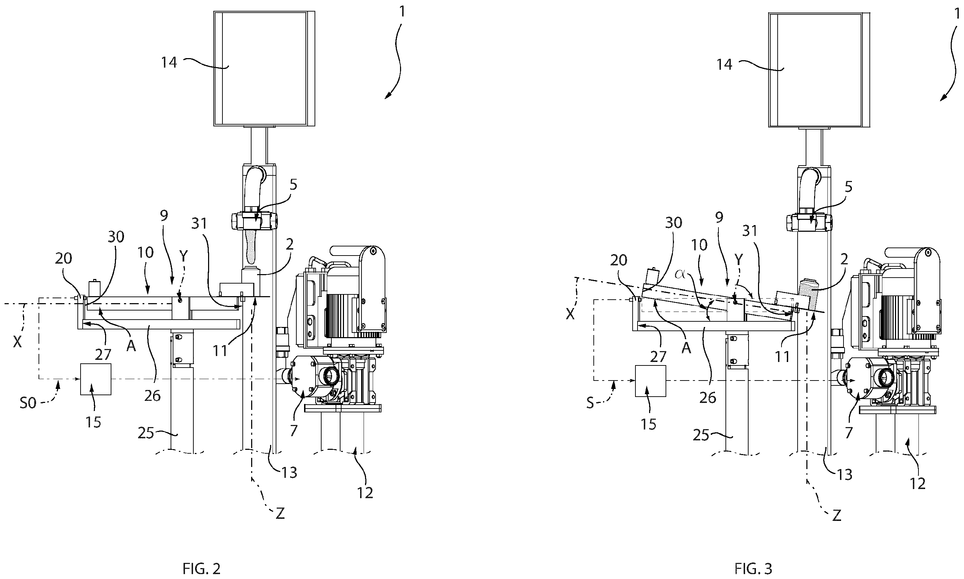

The operation of the unit 1 is illustrated starting from a condition (Figure 2) in which the article 2 which is still empty and to be filled engages the seat 9 and the valve 5 is arranged in the open position.

In such condition, the weight of the empty article 2 and the position of the counterweight 41 along the slit 40 are such to maintain the axis Y substantially horizontal and orthogonal to the axis Z. The end 30 faces the sensor 20 and is inside the volume A surrounding said sensor 20 which generates the signal S0. The control unit 15 acquires the signal SO and maintains the valve 5 in the open position.

In order to fill the article 2, the control unit 15 moves the valve 5 into the open position. The pourable product thus flows, by gravity, into the article 2, progressively increasing the weight thereof.

The increase in weight of the article 2 during the filling step causes a progressive increase in the angle α and a consequent progressive moving away of the end 30 from said sensor 20.

When the pourable product inside the article 2 reaches the desired quantity, the weight of the article 2 and of the pourable product contained therein brings the angle α to exceed the angle α0 (Figure 2).

Consequently, the end 30 is outside the volume A surrounding the sensor 20.

The sensor 20 thus generates the signal S which is acquired by the control unit 15. Upon the acquisition of the signal S, the control unit 15 commands the movement of the valve 5 from the open position to the closed one and/or the stopping of the pump 7.

The filling of the article 2 is thus stopped when said article 2 has been filled with the desired quantity of pourable product.

In the case it is desired to vary the desired quantity of food product with which to fill the article 2 or to fill an article 2 having a different weight, it is sufficient to recalibrate the unit 1.

In particular, such operation is carried out by moving the counterweight 41 inside the slit 40 parallelly to the axis Y and locking it in a new position inside the slit 40 such that:
- the end 30 faces the sensor 20 and is inside the volume A surrounding said sensor 20, when the article 2 is empty as illustrated in Figure 1; and
- the angle α exceeds the angle α0 and brings the end 30 outside the volume A surrounding the sensor 20, when the article 2 has been filled with the desired quantity of pourable product as illustrated in Figure 2.

By examining the characteristics of the unit 1 and of the filling method according to the present invention, the advantages that the latter allows obtaining are evident.

In particular, the support element 10 supporting the article 2 is mounted in a movable manner relative to the fixed sensor 20.

In such manner, during the filling of the article 2 with the pourable product, the support element 10 is located inside the area A until the weight of the pourable product inside the article 2 is less than the desired weight and exits the area A when the aforementioned weight reaches the desired weight.

The sensor 20 generates the signal SO until the support element 10 is inside the area A and generates the signal S when the support element 10 exits the area A, providing a prompt indication of the fact that the article 2 has been filled with the desired quantity of pourable product.

As soon as the control unit 15 acquires the signal S, said control unit 15 moves the valve 5 from the open position to the closed position and, if necessary, stops the pump 7, thus interrupting the filling of the article 2.

It is thus possible to fill the article 2 with the desired quantity of pourable product without having to arrange a weight sensor in the area underneath the seat 11, greatly simplifying the layout of the unit 1.

The counterweight 40 is slidable inside the slit 41 parallelly to the axis X so as to allow recalibrating the unit 1 when it is necessary to fill new articles 2 having a different weight and/or with a different quantity of pourable product.

It is clear that modifications and variations can be made to the unit 1 and to the described and illustrated filling method without thereby departing from the scope of protection defined by the claims.

In particular, the sensor 20 could be a sensor designed to detect the value of the angle α and to generate the signal S when the angle α is above a threshold value α0 and the signal SO when the angle α is below a threshold value α0.

The unit 1 could further comprise a plurality of valves 5 and respective support elements 10 arranged underneath the respective valves 5.

The valves 5 and the respective support elements 10 could be mounted on respective conveyors which are movable according to a translation travel or rotation along an arc during which the valves 5 are moved from the respective closed positions to the open ones and vice versa.

## Claims

1. Filling unit (1) for filling at least one article (2) with a pourable product, comprising:
- at least one dispensing valve (5) which is selectively movable between an open position in which it allows the dispensing of said pourable product and a closed position in which it prevents said dispensing;
- at least one support element (10) which defines a support seat (11) for supporting said article (2), said support seat (11) being arranged in a predetermined position relative to said valve (5); and
- a control unit (15) operatively connected to said valve (5) and programmed to move said valve (5) between said open and closed positions;
**characterized in that** it comprises a sensor (20) relative to which said support element (10) is mounted in a movable manner;
said sensor (20) being designed to generate:
- a first signal (S0) when said support element (10) is located inside a volume (A) surrounding said sensor (20); and
- a second signal (S) when said support element (10) is located outside said volume (A) surrounding said sensor (20) ;
said control unit (15) being programmed to acquire said first or second signal (S0, S) from said sensor (20) and to move said valve (5) from said open position to said closed position when said sensor (20) generates, in use, one (S) of said first and second signals (S0, S).

2. The unit according to claim 1, **characterized in that** said control unit (15) is programmed to move said valve (5) from said open position to said closed position when said sensor (20) generates said second signal (S).

3. The unit according to claim 1 or 2, **characterized in that** said support element (10) is inclinable relative to a first axis (Y) relative to said sensor (20).

4. The unit according to claim 3, **characterized in that** it comprises a structure (9) to which said sensor (20) is attached;
said support element (10) being hinged to said structure (9).

5. The unit according to claim 4, **characterized in that** said support element (10) comprises a feedback element (30) arranged in a second position at a distance from said first axis (Y);
said sensor (20) being designed to detect the presence or absence of said feedback element (30) inside said volume (A) .

6. The unit according to claim 5, **characterized in that** said feedback element (30) is arranged on the opposite side of said seat relative to said first axis (Y).

7. The unit according to any of the preceding claims, **characterized in that** said support element (10) further comprises:
- a guide (40) elongated along a second axis (X) transverse to said first axis (Y); and
- a counterweight (41) which is slidable on said guide (40) in a direction parallel to said second axis (X).

8. The unit according to claim 7, when dependent on claim 6, **characterized in that** said guide (40) and said counterweight (41) are arranged on the same side of said feedback element (30) relative to said first axis (Y).

9. The unit according to any of the preceding claims, **characterized in that** said first axis (Y) is transverse to a third axis (Z) arranged, in use, vertically.

10. The unit according to any of the claims, **characterized in that** said sensor (20) is a proximity sensor designed to detect the presence or absence of said support element (10) inside said area (A).

11. Method for filling at least one article (2) with a pourable product, comprising the steps of:
i) selectively moving at least one dispensing valve (5) between an open position in which it allows the dispensing of said pourable product and a closed position in which it prevents said dispensing;
ii) arranging said article (2) on a seat (11) of a support element (10) at a predetermined position relative to said valve (5);
iii) moving said valve (5) between said open and closed positions;
**characterized in that** it further comprises the steps of:
iv) generating a first signal (S0) when said support element (10) is located inside a volume (A) surrounding a sensor (20); said support element (10) being mounted in a movable manner relative to said sensor (20); and
v) generating a second signal (S) when said support element (10) is located outside said volume (A);
vi) acquiring said first or second signal (S0, S) from said sensor (20) and moving said valve (5) from said open position to said closed position when said sensor (20) generates one (S) of said first and second signals (S0, S) .

12. The method according to claim 11, **characterized in that** said step vi) comprises the step vii) of moving said valve (5) from said open position to said closed position when said sensor (20) generates said second signal (S) .

13. The method according to claim 11 or 12, **characterized in that** said steps iv) and v) respectively comprise the steps of:
viii) generating said first signal (S0) when a feedback element (30) carried by said support element (10) is located inside said volume (A); and
ix) generating said second signal (S) when said feedback element (30) is located outside said volume (A);
said feedback element (30) being arranged on the opposite side of said seat (11) relative to said first axis (Y).

14. The method according to any of claims 11 to 13, **characterized in that** it comprises the step x) of moving a counterweight (41) on a guide (40) carried by said support element (10) along a second axis (X) transverse to said first axis (Y) during an operation for the calibration of said unit (1).

15. The method according to any of claims 11 to 14, **characterized in that** it comprises the step xi) of detecting the presence or absence of said support element (10) inside said volume (A) by means of said sensor (20).
